# EUROPEAN PATENT APPLICATION

(11) **EP 4 009 492 A1**
(43) Date of publication of application: **08.06.2022**
(21) Application number: 21209395.9
(22) Date of filing: 19.11.2021
(51) Int. Cl.: H02K 1/14, H02K 3/28

(54) **STATOR CORE ASSEMBLY, STATOR ASSEMBLY, ELECTRIC MOTOR DEVICE AND METHODS THEREFOR**

(30) Priority: 01.12.2020 CN 202011391381
(71) Applicant: Techtronic Cordless GP, Anderson, SC 29621 (US)
(72) Inventor: LEE, Hei Man, Kwai Chung (HK); WANG, Li Feng, Dongguan City (CN)
(74) Representative: Novagraaf Group

(57) **Abstract**

Disclosed are a stator core assembly, a stator assembly, an electric motor device and methods therefor. The stator core assembly comprises a plurality of core units, each core unit comprising a yoke portion and a tooth portion, wherein the yoke portion extends in a first direction, and the tooth portion is connected to the yoke portion and extends in a second direction; the tooth portion comprises a tooth tail disposed away from the yoke portion; and each core unit is engaged with an adjacent core unit such that the plurality of core units are in a chain configuration. Further disclosed are a stator assembly, an electric motor device and methods therefor. The stator core assembly, the stator assembly, the electric motor device and the method therefor according to one or more embodiments of the present invention can improve the performance of an electric motor, prolong the service life, extend application scenarios, are simple in process and are cost-effective.

## Description

### Technical Field

The present invention relates to the field of electric motors, and more particularly to a stator core assembly, a stator assembly, an electric motor device and methods therefor.

### Background Art

An electric motor or a motor is an electromagnetic device that converts or transmits electric energy based on electromagnetic induction. Its main function is to produce a drive torque as a power source for electrical appliances or various kinds of machinery. The electric motor generally comprises a stator and a rotor. The rotor rotates relative to the stator under the effect of a magnetic field, so as to produce a torque.

Many of the existing electric motor devices or systems have a number of disadvantages, such as undesirable electromagnetic noise, magnetic imbalance and vibration, thereby affecting the performance and application of the electric motor. Many of the existing electric motor devices or systems are also complicated in process, have high manufacturing costs, and are unsatisfactory in terms of precision.

### Summary of the Invention

In view of one or more of the technical disadvantages of the prior art, the present invention provides a stator core assembly, a stator assembly, an electric machine device, and methods therefor.

According to an aspect of the present invention, provided is a stator core assembly. The stator core assembly comprises a plurality of core units, each core unit comprising a yoke portion and a tooth portion, wherein the yoke portion extends in a first direction, and the tooth portion is connected to the yoke portion and extends in a second direction different from the first direction; the tooth portion comprises a tooth tail disposed away from the yoke portion; and each core unit is engaged with an adjacent core unit such that the plurality of core units are in a chain configuration.

According to another aspect of the present invention, provided is a stator assembly. The stator assembly comprises a plurality of core units and a coil winding associated with each core unit, each core unit comprising a yoke portion and a tooth portion, wherein the yoke portion extends in a first direction, and the tooth portion extends in a second direction different from the first direction; one end of the tooth portion is connected to the yoke portion, and the other end of the tooth portion is provided with a tooth tail; the coil winding is disposed on the tooth portion; and the yoke portion of each core unit is engaged with the yoke portion of an adjacent core unit, and a gap exists between the tooth tail of each core unit and the tooth tail of the adjacent core unit, such that in a plane determined by the first direction and the second direction, the yoke portions of the plurality of core units form a continuous first circular ring, and the tooth tails of the plurality of core units form a discontinuous second circular ring.

According to a further aspect of the present invention, provided is an electric motor device. The electric motor device comprises a rotor and a stator assembly, wherein the stator assembly defines an inner cavity, and the rotor is disposed in the inner cavity and is configured to be capable of rotating relative to the stator assembly.

In some embodiments, the stator assembly has six slots, and the rotor has two poles.

In some embodiments, the rotor comprises a two-pole annular magnet.

According to a still further aspect of the present invention, provided is a method for manufacturing a stator assembly. The method comprises providing a stator core assembly in a chain configuration, wherein the stator core assembly comprises a plurality of core units, each core unit being engaged with an adjacent core unit; disposing the stator core assembly on a bobbin; disposing a coil winding on each core unit; bending the bobbin and the stator core assembly to form a full circle such that ends of the bobbin are connected to each other; and engaging ends of the stator core assembly that is bent to form the full circle.

In some embodiments, the method further comprises connecting the coil winding of each core unit in series with the coil winding of the geometrically opposed core unit.

In some embodiments, the method further comprises adjusting and positioning the bobbin and the stator core assembly that form the full circle.

In some embodiments, the step of providing a stator core assembly in a chain configuration comprises forming the chain configuration by means of stamping.

In some embodiments, the step of engaging ends of the stator core assembly that is bent to form the full circle comprises performing engagement by means of welding.

In some embodiments, the welding includes laser welding.

In some embodiments, the method further comprises welding a connecting portion between adjacent core units.

In some embodiments, the bobbin is an insulating bobbin, and the step of disposing the stator core assembly on the bobbin comprises inserting the stator core assembly into a corresponding position of the insulating bobbin.

According to a yet still further aspect of the present invention, provided is a method for manufacturing an electric motor device. The method comprises providing a stator assembly, providing an annular magnet, and disposing the annular magnet within an inner cavity defined by the stator assembly to serve as a rotor.

The stator core assembly, the stator assembly, the electric motor device and the methods therefor according to various embodiments of the present invention have various advantages. For example, an assembly or device according to one or more embodiments of the present invention can improve the performance of an electric motor, for example, obtain an optimized (e.g., smooth) back electromotive force, a better vibration performance, etc. For example, an assembly or device according to one or more embodiments of the present invention can effectively eliminate harmonic components that generate electromagnetic noise, improve the performance, and enhance the user experience. A device or method according to one or more embodiments of the present invention can simplify the process, save on materials and prolong the service life, and can be applied in a wider range of applications, for example, the device or method is advantageous for high-speed applications (up to 100,000 rpm).

More embodiments of the present invention and beneficial technical effects thereof will be described in detail below.

### Brief Description of the Drawings

Fig. 1 is a schematic structural diagram of a stator core assembly according to some embodiments of the present invention.
Fig. 2A is a schematic structural diagram of a connecting portion in Fig. 1.
Fig. 2B is a schematic structural diagram of a head end of a head core unit in Fig. 1.
Fig. 2C is a schematic structural diagram of a tail end of a tail core unit in Fig. 1.
Fig. 3 is a schematic structural diagram of a core unit of a stator core assembly according to some embodiments of the present invention.
Fig. 4A is a schematic structural diagram of a stator assembly according to some embodiments of the present invention.
Fig. 4B is a schematic diagram of a connection mode of coil windings of the stator assembly in Fig. 4A.
Fig. 4C is another schematic diagram of the connection mode of the coil windings of the stator assembly in Fig. 4A.
Fig. 5A is a schematic structural diagram of an electric motor device according to some embodiments of the present invention.
Fig. 5B is a schematic diagram of the electric motor device in Fig. 5A from another viewing angle.
Fig. 6 is a flow chart of a method for manufacturing a stator assembly according to some embodiments of the present invention.
Fig. 7A is a schematic diagram of a stator core assembly according to some embodiments of the present invention.
Fig. 7B is a schematic diagram of the stator core assembly in Fig. 7A before the stator core assembly is disposed on a bobbin.
Fig. 7C is a schematic diagram of the stator core assembly in Fig. 7A after the stator core assembly is disposed on the bobbin.
Fig. 7D is a schematic diagram of coil windings being arranged on the stator core assembly disposed on the bobbin.
Fig. 7E is a schematic diagram of the bobbin and the stator core assembly being bent to form a full circle.
Fig. 8 is a flow chart of a method for manufacturing an electric motor device according to some embodiments of the present invention.
Fig. 9 is a schematic structural diagram of a stator core assembly having three core units according to some embodiments of the present invention.

### Detailed Description of Embodiments

To facilitate understanding of the present invention, various illustrative embodiments are described below with reference to the accompanying drawings. It will be understood by those skilled in the art that the embodiments herein are for illustrative purposes only and are in no way intended to limit the present invention.

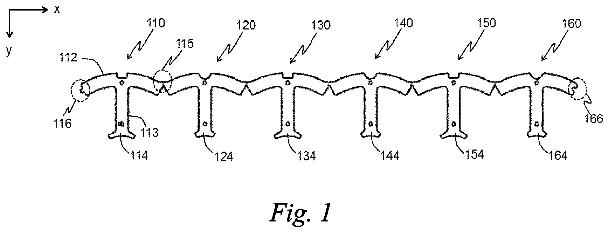

According to an aspect of the present invention, a schematic structural diagram of a stator core assembly according to some embodiments of the present invention is shown in Fig. 1. The illustrated stator core assembly may be used, for example, to form at least a portion of a stator assembly of an electric motor. The electric motor may be one or more suitable types of electric motors, such as an internal rotor motor, and a brushless motor.

As shown in Fig. 1, the stator core assembly includes a plurality of core units 110, 120, 130, 140, 150, 160. Each core unit includes a yoke portion and a tooth portion. For the sake of brevity, the core unit 110 is taken as an example for description herein and is similarly applicable to the other core units. The core unit 110 includes a yoke portion 112 and a tooth portion 113. The yoke portion 112 substantially extends in a first direction (exemplified as the x-direction), and the tooth portion 113 is connected to the yoke portion 112 and substantially extends in a second direction (exemplified as the y-direction). The second direction is different from the first direction. The tooth portion 113 includes a tooth tail 114 disposed away from the yoke portion 112. In addition, for ease of reference below, Fig. 1 also shows tooth tails 124, 134, 144, 154, 164 of the other core units.

Each core unit is engaged with an adjacent core unit such that the core units are in a chain configuration. For example, the core unit 110 is engaged with the core unit 120 by means of a connecting portion 115. Except for the core units 110 and 160 at the head and tail, each of the intermediate core units 120, 130, 140, 150 is engaged with the left and right adjacent core units. Thus, the stator core assembly is in the form of a chain.

The core unit 110 may be referred to as a head core unit and the core unit 160 may be referred to as a tail core unit. The distinction between the head and the tail herein is only relative, and is only for ease of description. The yoke portion of the core unit 110 has a head end 116. The head end 116 is away from the core unit 120. The yoke portion of the core unit 160 has a tail end 166. The tail end 166 is away from the core unit 150. The head end 116 and the tail end 166 are configured to be matched such that the head end 116 can be engaged with the tail end 166. This is advantageous during formation of the stator assembly.

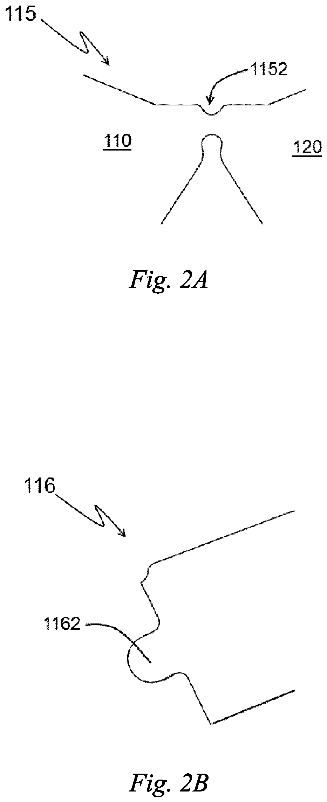

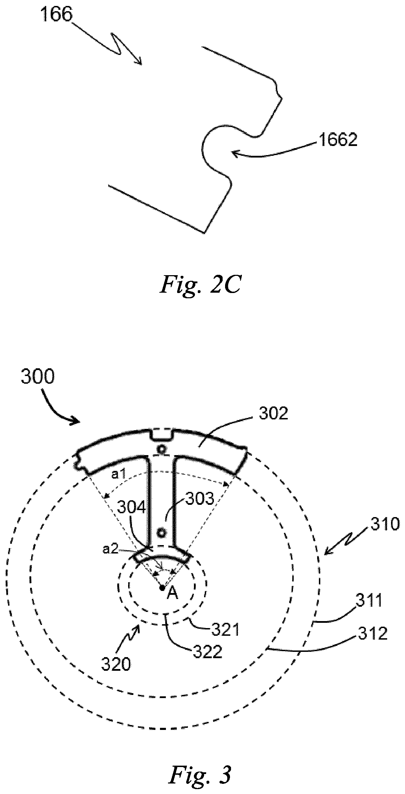

Reference is further made to Figs. 2A-2C. Fig. 2A is a schematic structural diagram of the connecting portion 115 in Fig. 1. Fig. 2B is a schematic structural diagram of the head end 116 of the head core unit in Fig. 1. Fig. 2C is a schematic structural diagram of the tail end 166 of the tail core unit in Fig. 1. As shown in Fig. 2A, the connecting portion 115 includes a groove 1152. In some embodiments, the connecting portion is integrally formed with two adjacent core units. The groove 1152 is advantageous when the stator core assembly is operated, for example, in assembly. As an example, the groove 1152 may facilitate relative deformation or displacement of two adjacent core units. As another example, the groove 1152 may cooperate with another component (e.g., a part having a protrusion) to facilitate assembly. As shown in Figs. 2B and 2C, the head end 116 includes a protrusion 1162, and the tail end 166 includes a recess 1662. The recess 1662 is engageable with the protrusion 1162 such that the core unit 110 can be docked or engaged with the core unit 160 during the formation of the stator assembly, thereby operating the stator core assembly in the chain configuration into a generally circular or annular stator assembly.

Fig. 3 is a schematic structural diagram of a core unit 300 of a stator core assembly according to some embodiments of the present invention. The core unit 300 may be, for example, one or more of the core units 110 to 160 shown in Fig. 1, or a typical representation thereof. The plane shown in Fig. 3 may be, for example, the xy plane shown in Fig. 1.

As shown in Fig. 3, the core unit 300 includes a yoke portion 302, a tooth portion 303, and a tooth tail 304 disposed at one end of the tooth portion 303. The yoke portion 302 is a portion of a first circular ring 310, the tooth tail 304 is a portion of a second circular ring 320, and the first circular ring 310 and the second circular ring 320 have the same centre A.

The first circular ring 310 includes an outer circle 311 and an inner circle 312. The outer circle 311 has a diameter in the range of 10 millimeters (mm) to 60 mm, such as in the range of 20-50 mm, 30-40 mm, or 35-45 mm. In some embodiments, the diameter of the outer circle 311 is 48 mm.

The second circular ring 320 includes an outer circle 321 and an inner circle 322. The inner circle 322 has a diameter in the range of 6 mm to 20 mm, such as in the range of 10-18 mm or 12-15 mm. In some embodiments, the diameter of the inner circle 322 is 12.5 mm.

In some embodiments, the ratio of the diameter of the outer circle 311 of the first circular ring 310 to the diameter of the inner circle 322 of the second circular ring 320 is no more than 10. In some embodiments, the ratio of the diameter of the outer circle 311 of the first circular ring 310 to the diameter of the inner circle 322 of the second circular ring 320 is in the range of 3 to 4, such as 3, 3.5 or 4.

The yoke portion 302 is a portion of the first circular ring 310. Thus, the yoke portion 302 corresponds to a circumferential angle a1. The circumferential angle a1 may be selected according to actual requirements. In some embodiments, the circumferential angle a1 is in the range of 40 degrees to 120 degrees, such as 40 degrees, 60 degrees, 90 degrees or 120 degrees. The yoke portion 302 has an arc length corresponding to the circumferential angle a1. The arc length may be defined as the arc length of the yoke portion 302 along the circumference of the outer circle 311, or the arc length of the yoke portion 302 along the circumference of the inner circle 312. For ease of description, the arc length of the yoke portion is defined herein as the arc length of the yoke portion along the circumference of the outer circle of the first circular ring.

The tooth tail 304 is a portion of the second circular ring 320. Thus, the tooth tail 304 corresponds to a circumferential angle a2. The circumferential angle a2 may be selected according to actual requirements. In some embodiments, the circumferential angle a2 is in the range of 40 degrees to 120 degrees, such as 40 degrees, 50 degrees, 60 degrees, 70 degrees, 80 degrees, 90 degrees, 100 degrees, 110 degrees or 120 degrees. The tooth tail 304 has an arc length corresponding to the circumferential angle a2. The arc length may be defined as the arc length of the tooth tail 304 along the circumference of the outer circle 321, or the arc length of the tooth tail 304 along the circumference of the inner circle 322. For ease of description, the arc length of the tooth tail is defined herein as the arc length of the tooth tail along the circumference of the inner circle of the second circular ring.

Referring again to Fig. 1, as illustrated, the tooth tail of each core unit corresponds to a configuration. The configuration may include geometric characteristics, such as shape, arc length and circumferential angle, of the tooth tail. The tooth tail of each core unit may have the same configuration or may have a different configuration. In some embodiments, the tooth tails of at least two of the core units have different configurations. In another embodiments, the tooth tails of adjacent ones of the core units have different configurations. In some other embodiments, the tooth tails of at least two of the core units have different arc lengths in a circumferential direction of the second circular ring. For example, the tooth tail 114 and the tooth tail 144 have different arc lengths. In another embodiments, the tooth tails of adjacent ones of the core units have different arc lengths in the circumferential direction of the second circular ring. For example, the tooth tail 114 and the tooth tail 124 have different arc lengths. In still other embodiments, the tooth tails of adjacent ones of the core units have different arc lengths in the circumferential direction of the second circular ring, but two tooth tails spaced by one tooth tail have the same arc lengths. For example, the tooth tail 114 has a different arc length from the tooth tail 124, but has the same arc length as the tooth tail 134. The tooth tail 124 has a different arc length from the tooth tail 134, but has the same arc length as the tooth tail 144.

In some embodiments, at least two of the circumferential angles corresponding to the tooth tails of the plurality of core units are different. The tooth tail 114 and the tooth tail 144 correspond to different circumferential angles. In another embodiments, adjacent tooth tails correspond to different circumferential angles. For example, the tooth tail 124 corresponds to a different circumferential angle from the tooth tail 114 and the tooth tail 134, and the tooth tail 154 corresponds to a different circumferential angle from the tooth tail 144 and the tooth tail 164. In still other embodiments, two tooth tails spaced by one tooth tail correspond to the same circumferential angle. For example, the tooth tail 114 corresponds to a different circumferential angle from the tooth tail 124, but corresponds to the same circumferential angle as the tooth tail 134. The tooth tail 144 corresponds to a different circumferential angle from the tooth tail 134 and the tooth tail 154, but corresponds to the same circumferential angle as the tooth tail 124 and the tooth tail 164.

Compared to a design in which all the tooth tails have the same configuration, it is advantageous that the configurations of at least two tooth tails are different, and two tooth tails spaced by one tooth tail having the same configuration (e.g., arc length, circumferential angle, etc.) will enhance this benefit. For example, such a design can reduce a cogging torque, reduce vibration and noise of an electric motor, and improve the control precision and accuracy of an electric motor system. In addition, the design is simple and easy to implement, does not increase design costs and complexity, and is cost-effective.

Furthermore, six core units are shown in Fig. 1. It will be understood by those skilled in the art that this is merely to illustrate the idea of the embodiments of the present invention and is in no way intended to limit the present invention. Those skilled in the art may select an appropriate number of core units, such as less than six (e.g., three) or more than six, according to actual requirements. In some embodiments, an even number of core units may be provided, such as eight or twelve.

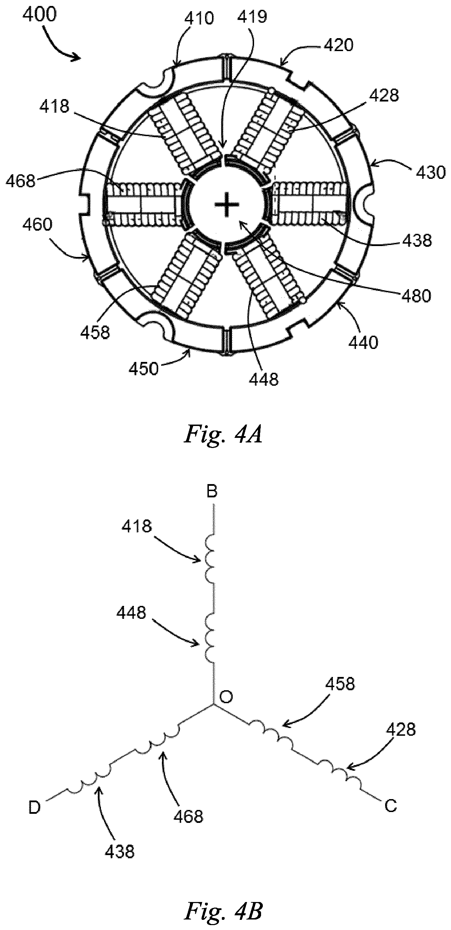

According to another aspect of the present invention, a schematic structural diagram of a stator assembly 400 according to some embodiments of the present invention is shown in Fig. 4A. At least a portion of the stator assembly 400 may be formed, for example, by applying an appropriate operation to the stator core assembly shown in Fig. 1. For example, the stator assembly 400 may be formed by winding wires around the stator core assembly shown in Fig. 1 and then engaging or assembling the core unit 110 with the core unit 160.

As shown in Fig. 4A, the stator assembly 400 includes a plurality of core units 410, 420, 430, 440, 450, and 460, and a coil winding 418, 428, 438, 448, 458, and 468 respectively associated with each core unit. Each core unit includes a yoke portion and a tooth portion. One end of the tooth portion is connected to the yoke portion, and the other end of the tooth portion is provided with a tooth tail. Each coil winding is disposed on the corresponding tooth portion. The yoke portion of each core unit is engaged with the yoke portion of the adjacent core unit, and a gap exists between the tooth tail of each core unit and the tooth tail of the adjacent core unit. For the sake of brevity, only a gap 419 between the tooth tail of the core unit 410 and the tooth tail of the core unit 420 is illustrated. The presence of the gaps also means that the tooth tails of the adjacent core units are not connected, thereby creating intermittent or discontinuous spaces. In this way, as illustrated, in the plane shown, the yoke portions of the plurality of core units form a continuous first circular ring, and the tooth tails of the plurality of core units form a discontinuous second circular ring.

Furthermore, as shown, the second circular ring defined by the tooth tails defines an inner cavity 480. The inner cavity may be used for having a rotor, a rotary shaft or other components disposed therein, which will be described below.

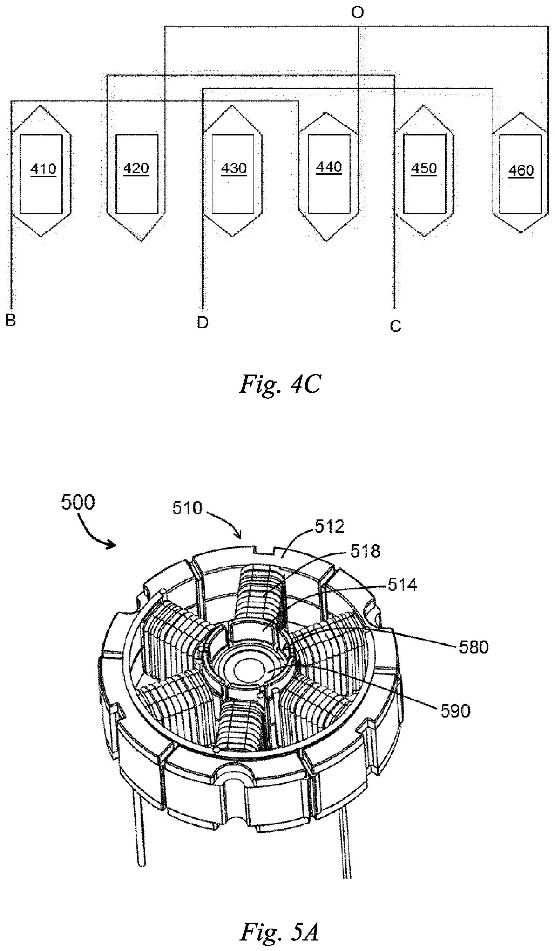

An example of the electrical connection of the coil windings of the stator assembly is shown in Figs. 4B and 4C. As shown, the coil winding of each core unit is connected in series with the coil winding of the geometrically opposed core unit. The expression "geometrically opposed" can be understood as being symmetrical relative to the center of the inner cavity (e.g., inner cavity 480). As an example, the coil windings 418 and 448 are connected in series and are led out from an electrical contact B, the coil windings 428 and 458 are connected in series and are led out from an electrical contact C, and the coil windings 438 and 468 are connected in series and are led out from an electrical contact D. Three branches or circuits are thus formed, which converge at a point O. When the coil windings 428 and 458 are connected in series, the two may also be referred to as forming a winding set or a set of coil windings. Thus, the coil windings configured in Figs. 4B and 4C are formed as a Y-connection or Y-configuration.

The configuration of the coil windings in Figs. 4B and 4C has many advantages. For example, the back electromotive force generated during operation of the electric motor device may be optimized. For example, the waveform of the back electromotive force is made smoother and more stable, thereby enhancing the working stability of the electric motor and improving the control precision.

In the prior art, for example, for a conventional six-slot, two-pole electric motor, there is one slot per pole per phase, and an integer-slot winding method is generally used, namely, the span is 3, so that an armature field forms a similar trapezoidal wave. When the electric motor operates at a relatively high rotational speed, the harmonic components combined into the trapezoidal wave tend to cause sharp electromagnetic noise, thereby causing discomfort to a user when the whole motor is used. According to a concentrated winding method of this embodiment, the armature field may be formed into a similar sine wave, and the harmonic components generating electromagnetic noise can be effectively eliminated, thereby improving the performance of the electric motor and enhancing the user experience.

In addition, for many electric motor systems in the prior art, the winding process is difficult, and a large amount of material is consumed (for example, a large amount of copper wire is consumed). In contrast, this embodiment employs a concentrated winding method, which has a simple process, can effectively reduce electromagnetic noise, and can also save on the material of the coils (for example, reduce the amount of copper consumed), thereby reducing the processing time and being cost-effective.

It will be understood by those skilled in the art that six core units are shown in Figs. 4A-4C, which is merely to illustrate the idea of the embodiment of the present invention and is in no way intended to limit the present invention. Those skilled in the art may select an appropriate number of core units, such as less than six (e.g., three) or more than six, according to actual requirements. In some embodiments, an even number of core units may be provided, such as eight or twelve.

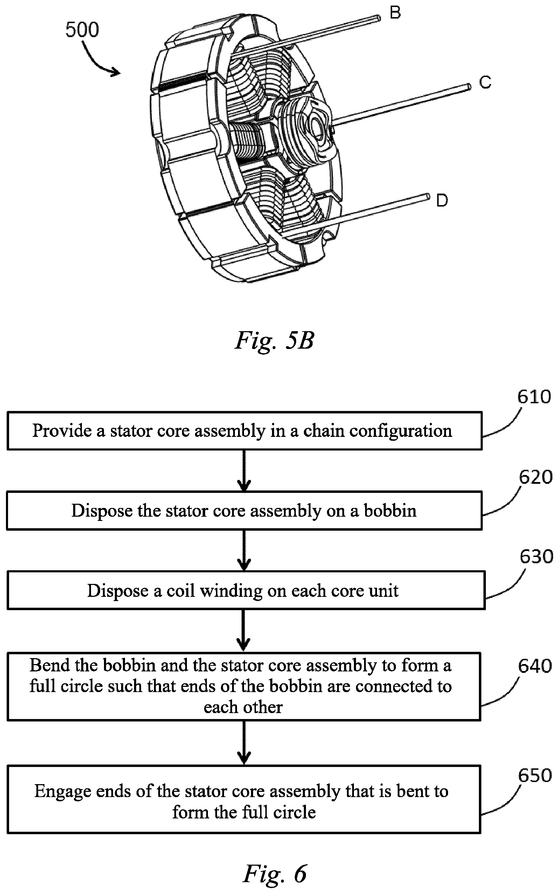

According to yet another aspect of the present invention, schematic structural diagrams of an electric motor device 500 according to some embodiments of the present invention are shown in Figs. 5A and 5B from different viewing angles. The electric motor device 500 includes a stator assembly and a rotor. The stator assembly may be, for example, the stator assembly 400 illustrated in Fig. 4A. At least a portion of the stator assembly may be formed, for example, by applying an appropriate operation to the stator core assembly illustrated in Fig. 1.

The stator assembly includes a plurality of core units and a rotor 590. In Fig. 5A, for the sake of brevity, only one core unit 510 is marked. The core unit 510 includes a yoke portion 512 and a tooth portion. One end of the tooth portion is provided with a tooth tail 514. A coil winding 518 is provided on the tooth portion. The plurality of core units are engaged end to end, so as to define an inner cavity 580. The rotor 590 is at least partially disposed within the inner cavity 518 and is configured to be capable of rotating relative to the stator assembly.

The coil windings may be made by winding copper wires and may, for example, be wound by using the winding method illustrated according to Figs. 4B and 4C. The coil windings are connected to an external circuit via three electrical contacts B, C, D.

In this embodiment, the stator assembly has six slots, and the rotor 590 has two poles. In some embodiments, the rotor includes a two-pole annular magnet.

The electric motor device according to this embodiment has many advantages. For example, for many electric motor systems in the prior art, a large unbalanced magnetic pull is generated, which tends to cause loud noise during operation of the electric motor and also affects the dynamic balance of the rotor, shortening the service life of a bearing. However, according to the electric motor device of this embodiment, this drawback can be effectively avoided. By way of illustration, in some embodiments according to the present invention, the rotor is made of a two-pole annular magnet and has a small outer diameter, which can reduce the rotational inertia thereof and increase the operation speed; and the stator has six slots, which have a large slot area, so that the heat dissipation effect can be improved by increasing ventilation ducts. Other advantages are also possible.

Moreover, the electric motor device according to the present embodiment has a wider range of applications. Many electric motor systems in the prior art have lots of problems in high-speed applications. The electric motor device according to one or more embodiments of the present invention can be suitable for use in a wider range of speeds. For example, it can be applied to a high-speed brushless motor having a rotational speed of more than 10,000 rpm, and even when the rotational speed reaches 100,000 rpm, it is also possible to effectively reduce iron consumption and running noise caused by the unbalanced magnetic pull, and to prolong the service time of a tool and the service life of an electric motor.

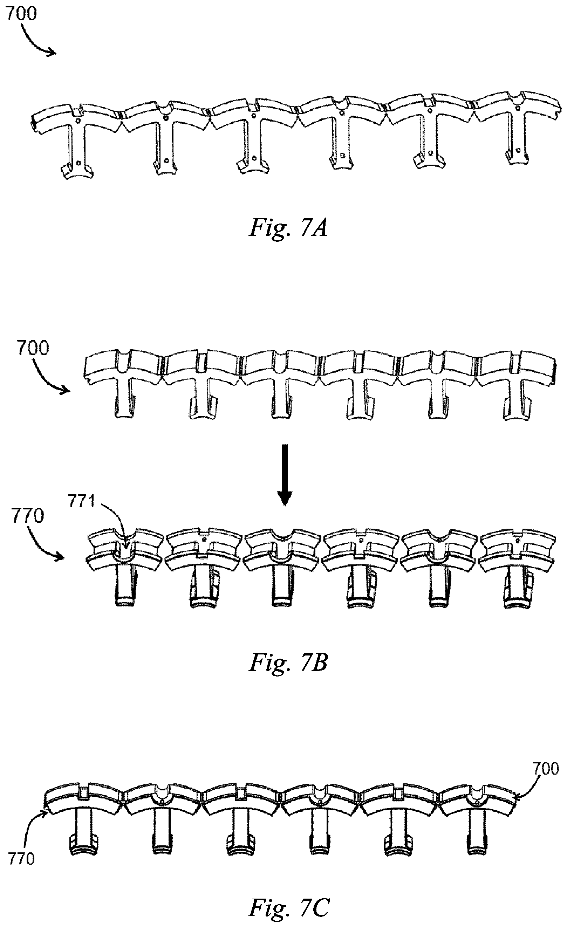

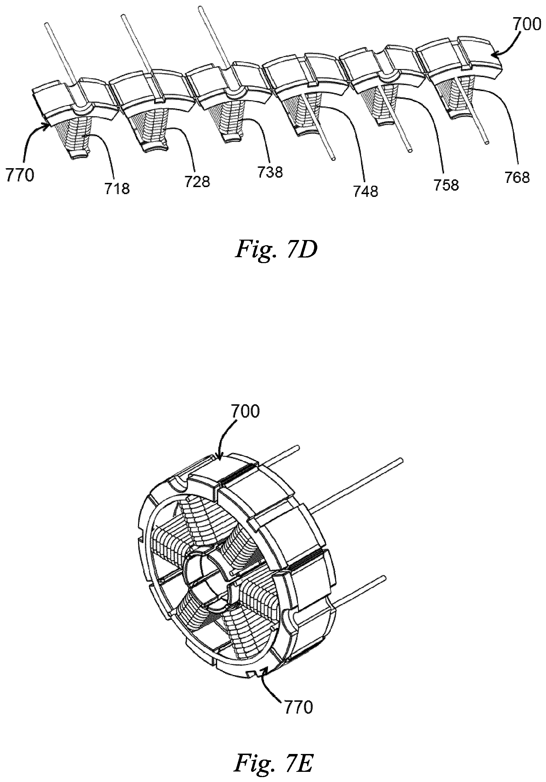

According to a further aspect of the present invention, a flow chart of a method for manufacturing a stator assembly according to some embodiments of the present invention is shown in Fig. 6. Schematic diagrams of some steps of a manufacturing process are shown in Figs. 7A-7E. The method illustrated in Figs. 6 and 7A-7E may be used, for example, to manufacture the stator assembly shown in Fig. 4A.

At block 610, a stator core assembly in a chain configuration is provided. The stator core assembly may be, for example, the stator core assembly described with reference to Fig. 1. The stator core assembly may also be, for example, the stator core assembly 700 as shown in Fig. 7A. Except for the head core unit and the tail core unit, each core unit is engaged with the left and right adjacent core units. The plurality of core units form a chain configuration.

The stator core assembly having a chain configuration may be formed in an appropriate manner. In some embodiments, the chain configuration is formed by means of stamping.

At block 620, the stator core assembly is disposed on a bobbin. The bobbin may be an insulating bobbin, for example a bobbin including a PA 66 plastic material reinforced with 50% glass fibre. The stator core assembly may be mounted on the bobbin with a suitable method. In some embodiments, the stator core assembly is fixed to the insulating bobbin by inserting the stator core assembly into a corresponding position of the insulating bobbin.

For example, as illustrated in Figs. 7B and 7C, the bobbin 770 is shaped to match the stator core assembly 700. The bobbin 770 has the same number of units as the core units of the stator core assembly 700, each unit having a cavity (only one cavity 771 is shown in Fig. 7B for the sake of brevity). The stator core assembly 700 may be introduced into the bobbin 770 in the direction shown by an arrow such that the tooth portion of each core unit is accommodated in the corresponding cavity, so as to couple the stator core assembly 700 to the bobbin 770, as shown in Fig. 7C.

At block 630, a coil winding is disposed on each core unit. For example, the coil is a copper wire. For example, coils may be disposed (e.g., wound) on the stator core assembly using the method illustrated in Figs. 4A to 4C. For example, the coil winding of each core unit may be connected in series with the coil winding of the geometrically opposed core unit to form desired connection. As an example, the coil windings 718, 728, 738, 748, 758, 768 may be wound around the corresponding core units by a winding machine, as shown in Fig. 7D.

At block 640, the bobbin and the stator core assembly are bent to form a full circle such that ends of the bobbin are connected to each other. This can be done, for example, by a rounding device. In some embodiments, the bobbin and the stator core assembly that form the full circle are further adjusted and positioned, thereby improving the precision and performance of the finally formed stator assembly. The adjustment and positioning may be performed using a suitable positioning device (e.g., a positioning plate, a positioning ring, etc.) according to actual requirements.

At block 650, ends of the stator core assembly that is bent to form the full circle are engaged. In some embodiments, the engagement is completed by means of welding. For example, the head end of the head core unit and the tail end of the tail core unit of the stator core assembly are welded together. Suitable welding methods may be used, such as laser welding.

In some embodiments, a connecting portion between adjacent core units (e.g., the connecting portion 115 shown in Fig. 1) is further welded, which is advantageous for further improving the mechanical properties of the stator assembly.

The method according to this embodiment has many advantages. For example, the manufacturing precision can be improved due to the use of the bobbin for fixation. Complex or expensive auxiliary tools may not be required to achieve desired precision. Furthermore, the method is simple in process and has low process complexity.

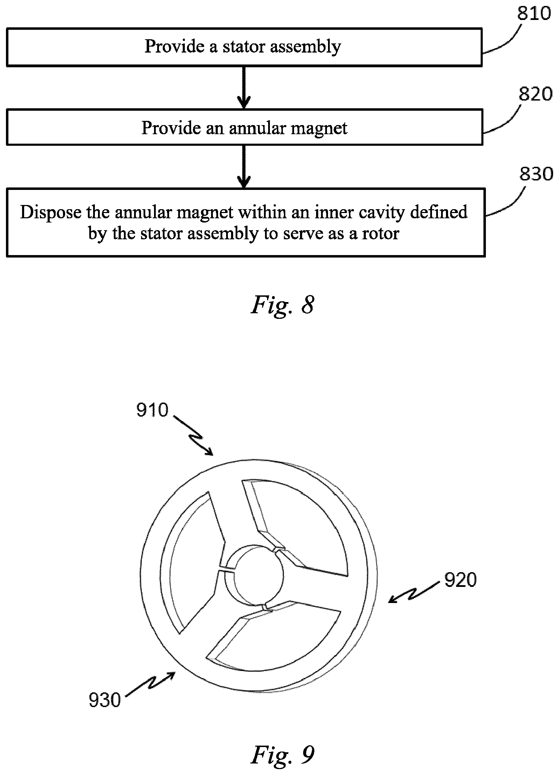

According to a still further aspect of the present invention, a flow chart of a method for manufacturing an electric motor device according to some embodiments of the present invention is shown in Fig. 8. The method may be used, for example, to manufacture the electric motor device 500 as shown in Figs. 5A and 5B. The method may be a specific implementation of the method for manufacturing an electric motor device according to one or more embodiments of the present invention. For example, the electric motor device is a direct-current brushless motor or another type of electric motor suitable for this exemplary method.

As illustrated, at block 810, a stator assembly is provided. For example, the stator assembly is a stator assembly 400 as illustrated in Fig. 4A. At block 820, an annular magnet is provided. For example, the annular magnet is a two-pole annular magnet. At block 830, the annular magnet is disposed within an inner cavity defined by the stator assembly to serve as a rotor. With regard to the other steps, such as disposing a motor output shaft, a bearing, a transmission mechanism, etc., those skilled in the art can rationally expect appropriate methods according to actual requirements, which will not be described in detail herein.

The embodiments described above are illustrative and are merely intended to illustrate the idea of the present invention, not limiting the present invention. For example, for clarity of illustration, elements in the figures are not necessarily drawn to scale and the various elements in the figures are not necessarily in their actual shapes. Furthermore, for the sake of brevity and clarity, only the core elements that are relevant to the idea of one or more embodiments of the present invention may be represented in one or more figures, rather than all elements of an assembly, an device, etc.

For example, in Fig. 3, the yoke portion 302 is a portion of the first circular ring 310. The tooth tail 304 is a portion of the second circular ring 320. This merely means that the yoke portion 302 is roughly or substantially within the range defined by the first circular ring 310 and the tooth tail 304 is roughly or substantially within the range defined by the second circular ring 320. Errors or slight or non-substantial deviations are allowable, and are intended to be within the scope of the idea of one or more embodiments of the present invention.

As another example, in Fig. 1, the core unit 110 may be referred to as the head core unit, and the core unit 160 may be referred to as the tail core unit. As described above, the distinction between the head and tail is only relative. That is, it is also possible that the core unit 110 is referred to as the tail core unit and the core unit 160 is referred to as the head core unit.

As still another example, it is shown in Figs. 2B and 2C that the head end 116 includes a protrusion 1162 and the tail end 166 includes a recess 1662. It will be understood by those skilled in the art that this is only an exemplary way of connecting the head and tail core units. After reading this disclosure, those skilled in the art will contemplate other variations to achieve the connection of the head and tail core units, which are within the scope of the idea of the embodiments of the present invention.

Furthermore, in order to illustrate the idea of the present invention from a different point of view, a structure with six core units is exemplified above. As described above, other numbers of core units are also possible. For example, a stator core assembly with three core units 910, 920, 930 is shown in Fig. 9. Each core unit includes a yoke portion and a tooth portion, and the tooth portion is provided with a tooth tail. The core units 910, 920, 930 may have a chain configuration prior to forming the illustrated end-to-end connected structure. For the sake of brevity, Fig. 9 does not show components such as coil windings.

Moreover, although the coil windings are exemplified to be in Y-connection in Figs. 4B and 4C, it will be understood by those skilled in the art that other connection modes are also possible. For example, in some embodiments, the coil windings use delta-connection or -configuration.

It will also be understood by those skilled in the art that the above embodiments are intended to illustrate the present invention in various aspects, and they are not isolated. Instead, those skilled in the art would have been able to appropriately combine the different embodiments according to the above examples to arrive at examples of other technical solutions.

Unless defined otherwise, the technical and scientific terms used herein have the same meaning as commonly understood by one of ordinary skill in the art to which the present invention pertains. The embodiments of the present invention are illustrated in the non-limiting examples. Variations that can be conceived by those skilled in the art on the basis of the embodiments disclosed above are within the scope of the present invention.

## Claims

1. Stator core assembly, **characterized by** comprising a plurality of core units, each core unit comprising a yoke portion and a tooth portion, wherein the yoke portion extends in a first direction, and the tooth portion is connected to the yoke portion and extends in a second direction different from the first direction; the tooth portion comprises a tooth tail disposed away from the yoke portion; and each core unit is engaged with an adjacent core unit such that the plurality of core units are in a chain configuration.

2. Stator core assembly according to Claim 1, **characterized in that** in a plane determined by the first direction and the second direction, for the same core unit, the yoke portion is a portion of a first circular ring, the tooth tail is a portion of a second circular ring, the first circular ring and the second circular ring have the same centre, an outer circle of the first circular ring has a diameter in the range of 10 mm to 60 mm, and an inner circle of the second circular ring has a diameter in the range of 6 mm to 20 mm.

3. Stator core assembly according to Claim 1 or 2, **characterized in that** the tooth tails of at least two of the plurality of core units have different configurations.

4. Stator core assembly according to Claim 1 or 2, **characterized in that** the tooth tails of adjacent ones of the plurality of core units have different configurations.

5. Stator core assembly according to Claim 2, **characterized in that** the tooth tails of at least two of the plurality of core units have different arc lengths in a circumferential direction of the second circular ring.

6. Stator core assembly according to Claim 2, **characterized in that** the tooth tails of adjacent ones of the plurality of core units have different arc lengths in a circumferential direction of the second circular ring.

7. Stator core assembly according to Claim 1 or 2, **characterized in that** the adjacent core units are engaged with each other by means of a connecting portion, and the connecting portion has a groove.

8. Stator core assembly according to Claim 1 or 2, **characterized in that** the plurality of core units comprise a head core unit and a tail core unit, wherein the yoke portion of the head core unit has a head end, the yoke portion of the tail core unit has a tail end, the head end comprises a protrusion, the tail end comprises a recess, and the recess being configured to be engageable with the protrusion.

9. Stator assembly, **characterized by** comprising a plurality of core units and a coil winding associated with each core unit, each core unit comprising a yoke portion and a tooth portion, wherein the yoke portion extends in a first direction, and the tooth portion extends in a second direction different from the first direction; one end of the tooth portion is connected to the yoke portion, and the other end of the tooth portion is provided with a tooth tail; the coil winding is disposed on the tooth portion; and the yoke portion of each core unit is engaged with the yoke portion of an adjacent core unit, and a gap exists between the tooth tail of each core unit and the tooth tail of the adjacent core unit, such that in a plane determined by the first direction and the second direction, the yoke portions of the plurality of core units form a continuous first circular ring, and the tooth tails of the plurality of core units form a discontinuous second circular ring.

10. Stator assembly according to Claim 9, **characterized in that** the plurality of core units comprise an even number of core units, and the coil winding of each core unit is connected in series with the coil winding of the geometrically opposed core unit.

11. Stator assembly according to Claim 10, **characterized in that** the plurality of core units comprise six core units, and the coil windings of the six core units are configured to be Y-connected or delta-connected.

12. Stator assembly according to any one of Claims 9 to 11, **characterized in that** the ratio of the diameter of an outer circle of the first circular ring to the diameter of an inner circle of the second circular ring is no more than 10.

13. Stator assembly according to Claim 12, **characterized in that** the ratio of the diameter of the outer circle of the first circular ring to the diameter of the inner circle of the second circular ring is in the range of 3 to 4.

14. Stator assembly according to any one of Claims 9 to 11, **characterized in that** a circumferential angle corresponding to the tooth tail of each core unit is in the range of 40 degrees to 120 degrees.

15. Stator assembly according to any one of Claims 9 to 11, **characterized in that** at least two of circumferential angles corresponding to the tooth tails of the plurality of core units are different, or circumferential angles corresponding to adjacent tooth tails are different, or circumferential angles corresponding to two tooth tails spaced by one tooth tail are the same.
